# EUROPÄISCHE PATENTSCHRIFT

(11) **EP 3 031 677 B1**
(45) Veröffentlichungstag und Bekanntmachung des Hinweises auf die Patenterteilung: **21.02.2018**
(21) Anmeldenummer: 15193771.1
(22) Anmeldetag: 10.11.2015
(51) Int. Cl.: B60S 1/34, B60S 1/52

(54) **WISCHARMVORRICHTUNG**
WIPER ARM DEVICE
DISPOSITIF DE BALAI D'ESSUIE-GLACE

(30) Priorität: 10.12.2014 DE 102014225377
(43) Veröffentlichungstag der Anmeldung: 15.06.2016
(73) Patentinhaber: ROBERT BOSCH GMBH, 70442 Stuttgart (DE)
(72) Erfinder: RAPP, Harald, 77815 Buehl (DE); KRUSE, Michael, 76547 Sinzheim (DE); HORVATH, ZSOFIA, 8175 Balatonfüzfo (HU); BURKARD, Hermann, 76473 Iffezheim (DE)

(56) Entgegenhaltungen:
- DE-A1- 2 337 774
- DE-A1- 10 132 111
- US-A- 4 347 642
- US-A- 6 094 772
- US-B1- 6 286 174

## Beschreibung

### Stand der Technik

Es ist bereits eine Wischarmvorrichtung mit einer Wischstange und mit einer Waschwasserdüsenhalteeinheit, die zu einer Befestigung zumindest einer Waschwasserdüse an der Wischstange vorgesehen ist, vorgeschlagen worden. Die US 6,094,772 A1 offenbart eine Wischarmvorrichtung nach dem Oberbegriff des Anspruchs 1.

### Offenbarung der Erfindung

Die Erfindung geht aus von einer Wischarmvorrichtung mit einer Wischstange und mit einer Waschwasserdüsenhalteeinheit, die zu einer Befestigung zumindest einer Waschwasserdüse an der Wischstange vorgesehen ist.

Es wird vorgeschlagen, dass die Waschwasserdüsenhalteeinheit zumindest ein Halteblechelement umfasst. Dadurch kann eine besonders einfache und kostengünstige Herstellung der Waschwasserdüsenhalteeinheit erreicht werden. Unter einer "Wischstange" soll in diesem Zusammenhang insbesondere eine Stange verstanden werden, die einen Hebelarm zwischen einer Antriebswelle und einem Wischarmadapter der Wischarmvorrichtung bildet. Vorzugsweise weist die Wischstange einen zumindest im Wesentlichen rechteckigen Querschnitt auf. Weiterhin vorteilhaft ist die Wischstange von einer Metallstange, insbesondere von einer lackierten Metallstange gebildet. Vorteilhaft ist der Wischarmadapter mit der Wischstange vercrimpt. Bevorzugt ist ein Gelenkteil der Wischarmvorrichtung mit der Wischstange vercrimpt. Das Gelenkteil ist vorzugsweise gelenkig mit einem Befestigungsteil der Wischarmvorrichtung verbunden. Vorteilhaft ist das Befestigungsteil drehfest mit der Antriebswelle koppelbar ausgebildet. Unter einer "Waschwasserdüsenhalteeinheit" soll in diesem Zusammenhang insbesondere eine Einheit verstanden werden, die dazu vorgesehen ist, eine Waschwasserdüse an einer Wischstange unverlierbar zu befestigen. Unter einer "Waschwasserdüse" soll in diesem Zusammenhang insbesondere ein Element verstanden werden, das dazu vorgesehen ist, Waschwasser auszubringen, beziehungsweise in eine bestimmte Richtung zu sprühen. Unter "Waschwasser" soll in diesem Zusammenhang insbesondere eine zum Waschen und/oder Reinigen einer Fahrzeugscheibe geeignete Flüssigkeit verstanden werden, wie insbesondere Wasser, ein Alkohol oder ein Gemisch, das/der einen Wasseranteil, Frostschutzanteil und/oder Alkoholanteil aufweist. Unter einem "Halteblechelement" soll in diesem Zusammenhang insbesondere ein Element aus einem Blech verstanden werden, das zur Halterung einer Waschwasserdüse vorgesehen ist. Insbesondere weist das Halteblechelement eine wesentlich kleinere Dicke auf als eine Breite und/oder eine Länge. Unter "wesentlich kleiner" soll in diesem Zusammenhang insbesondere zumindest viermal kleiner, bevorzugt zumindest zehnmal kleiner, besonders bevorzugt zumindest 20-mal kleiner verstanden werden. Weiterhin vorteilhaft ist das Halteblechelement zumindest bereichsweise eben ausgebildet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass das zumindest eine Halteblechelement von einem Stanzbiegeteil gebildet ist. Dadurch kann eine besonders einfache und kostengünstige Herstellung und Montage des zumindest einen Halteblechelements erreicht werden. Unter einem "Stanzbiegeteil" soll in diesem Zusammenhang insbesondere ein Bauteil verstanden werden, das in einem Stanz- und/oder Biegeverfahren hergestellt ist. Vorzugsweise ist das Stanzbiegeteil aus Metall ausgebildet.

Ferner wird vorgeschlagen, dass die Waschwasserdüsenhalteeinheit in einem Wischblattinnenkreisbereich der Wischstange angeordnet ist. Dadurch kann eine an der Waschwasserdüsenhalteeinheit befestigte Waschwasserdüse besonders effizient Wasser auf die Fahrzeugscheibe auftragen. Unter einem "Wischblattinnenkreisbereich" soll in diesem Zusammenhang insbesondere ein Bereich verstanden werden, der sich über eine innere Längserstreckungshälfte der Wischarmvorrichtung erstreckt. Die innere Längserstreckungshälfte erstreckt sich insbesondere von einer Schwenkachse der Antriebswelle bis zu einem Längserstreckungsmittelpunkt der Wischarmvorrichtung. Bevorzugt erstreckt sich der Wischblattinnenkreisbereich in einem betriebsbereiten Zustand mit einem Radius von weniger als 10 cm, bevorzugt weniger als 5 cm um eine Innenendkappe eines an der Wischarmvorrichtung montierten Wischblatts.

Weiterhin wird vorgeschlagen, dass die Wischstange zumindest einen gerillten Befestigungsbereich zur Befestigung des zumindest einen Halteblechelements umfasst. Dadurch kann eine besonders sichere Längsfixierung der Waschwasserdüsenhalteeinheit erzielt werden. Unter "gerillt" soll in diesem Zusammenhang insbesondere auch geriffelt und/oder gekerbt verstanden werden. Bevorzugt erstreckt sich der Befestigungsbereich über zumindest 1 cm, bevorzugt über zumindest 2 cm, besonders bevorzugt über zumindest 3 cm. Weiterhin vorteilhaft weist die Wischstange im Befestigungsbereich zumindest drei Rillen oder alternativ zumindest sechs Rillen auf.

Zudem wird vorgeschlagen, dass das zumindest eine Halteblechelement zumindest eine Befestigungslasche zur Befestigung der zumindest einen Waschwasserdüse umfasst. Dadurch kann vorteilhaft eine einfache formschlüssige Verbindung zwischen dem zumindest einen Halteblechelement und der zumindest einen Waschwasserdüse erreicht werden. Unter einer "Befestigungslasche" soll in diesem Zusammenhang insbesondere ein dünnwandiges Befestigungselement verstanden werden, das zu einer Befestigung mit der zumindest einen Waschwasserdüse vorgesehen ist. Unter "dünnwandig" soll in diesem Zusammenhang insbesondere mit einer Dicke von weniger als 8 mm, bevorzugt von weniger als 5 mm, besonders bevorzugt von weniger als 3 mm verstanden werden.

Des Weiteren wird vorgeschlagen, dass das zumindest eine Halteblechelement ein erstes Verstemmteil umfasst, das dazu vorgesehen ist, mit der Wischstange verstemmt zu werden. Somit können eine besonders einfache Montage und eine hohe Betriebssicherheit erreicht werden. Unter einem "Verstemmteil" soll in diesem Zusammenhang insbesondere ein Bauteil verstanden werden, das dazu vorgesehen ist, bei einer Montage verstemmt zu werden. Bevorzugt sind das erste Verstemmteil und das zumindest eine Halteblechelement einstückig miteinander ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Ferner wird vorgeschlagen, dass das erste Verstemmteil in eine Wischstangenlängsrichtung betrachtet auf einer gleichen Höhe mit der Befestigungslasche angeordnet ist. Dadurch kann die Waschwasserdüsenhalteeinheit besonders kompakt und optisch unauffällig ausgebildet werden.

Weiterhin wird vorgeschlagen, dass das erste Verstemmteil in eine Wischstangenlängsrichtung betrachtet, versetzt zur Befestigungslasche angeordnet ist. Dadurch kann eine besonders sichere Befestigung der Waschwasserdüsenhalteeinheit an der Wischstange erreicht werden.

In einer zusätzlichen Ausgestaltung wird vorgeschlagen, dass das zumindest eine Halteblechelement ein zweites Verstemmteil aufweist, das in eine Wischstangenlängsrichtung betrachtet versetzt zum ersten Verstemmteil angeordnet ist. Dadurch kann eine Betriebssicherheit weiter erhöht werden. Nach der Erfindung umfasst zumindest eine Halteblechelement ein Formschlusselement, das zu einer formschlüssigen Fixierung in eine Wischstangenlängsrichtung vorgesehen ist. Dadurch kann eine besonders hohe Betriebssicherheit der zumindest einen Waschwasserdüse an der Wischstange erreicht werden. Bevorzugt bildet das Formschlusselement eine Befestigungsausnehmung zur Aufnahme eines Nockens der Wischstange aus. Alternativ kann das Formschlusselement auch einen Nocken ausbilden. Unter einer "Wischstangenlängsrichtung" soll in diesem Zusammenhang insbesondere eine maximale Erstreckung der Wischstange verstanden werden.
In einer weiteren Ausgestaltung der Erfindung wird vorgeschlagen, dass die Wischarmvorrichtung zumindest eine Waschwasserdüse umfasst, die am zumindest einen Halteblechelement angeordnet ist. Somit kann eine besonders gute Reinigung der Fahrzeugscheibe bei hoher Betriebssicherheit erreicht werden.
Zudem wird ein Verfahren zur Herstellung einer Wischarmvorrichtung vorgeschlagen, wobei ein Halteblechelement einer Waschwasserdüsenhalteeinheit mit einer Wischstange verstemmt wird. Dadurch kann eine besonders einfache und kostengünstige Montage einer Waschwasserdüse an einer Wischstange erreicht werden. Alternativ wird vorgeschlagen, dass ein Halteblechelement einer Waschwasserdüsenhalteeinheit mit einer Wischstange vercrimpt wird.

Die erfindungsgemäße Wischarmvorrichtung soll hierbei nicht auf die oben beschriebenen Anwendungen und Ausführungsformen beschränkt sein. Insbesondere kann die erfindungsgemäße Wischarmvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Wischarmvorrichtung und ein Wischblatt in einer Seitenansicht,
- Fig. 2: eine Waschwasserdüsenhalteeinheit der Wischarmvorrichtung nach Figur 1 in einer perspektivischen Darstellung,
- Fig. 3: einen montierten Zustand der Wischarmvorrichtung nach Figur 1 in einer perspektivischen Darstellung,
- Fig. 4: ein weiteres Ausführungsbeispiel einer Wischarmvorrichtung in einer perspektivischen Darstellung,
- Fig. 5: einen montierten Zustand der Wischarmvorrichtung nach Figur 4 in einer perspektivischen Darstellung,
- Fig. 6: ein weiteres Ausführungsbeispiel einer Wischarmvorrichtung in einer perspektivischen Darstellung,
- Fig. 7: einen montierten Zustand der Wischarmvorrichtung nach Figur 6 in einer perspektivischen Darstellung,
- Fig. 8: ein weiteres Ausführungsbeispiel einer Wischarmvorrichtung in einer perspektivischen Darstellung und
- Fig. 9: einen montierten Zustand der Wischarmvorrichtung nach Figur 8 in einer perspektivischen Darstellung.

### Beschreibung der Ausführungsbeispiele

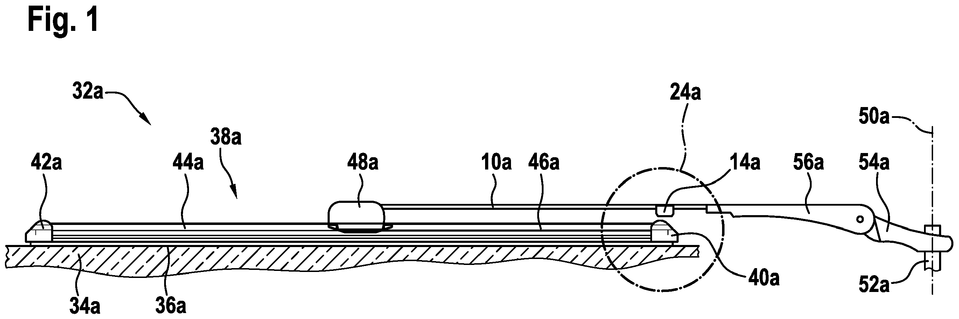

In der Figur 1 sind eine Wischarmvorrichtung mit einer Wischstange 10a und einem daran befestigten Wischblatt 32a dargestellt. Das Wischblatt 32a bildet ein Flachwischblatt aus. Das Wischblatt 32a ist zur Reinigung einer Fahrzeugscheibe 34a vorgesehen. Dazu weist das Wischblatt 32a eine Wischlippe 36a auf. Die Wischlippe 36a liegt in einem Wischbetrieb auf der Fahrzeugscheibe 34a auf. In einem Wischbetrieb streicht die Wischlippe 36a über die Fahrzeugscheibe 34a, wodurch die Fahrzeugscheibe 34a gereinigt wird. Das Wischblatt 32a weist eine Windabweisereinheit 38a auf, die sich über einen Großteil einer Hauptlängserstreckung des Wischblatts 32a erstreckt. Das Wischblatt 32a weist eine innere Endkappe 40a und eine äußere Endkappe 42a auf. Die Endkappen 40a, 42a schließen das Wischblatt 32a an Längsenden ab. Die Windabweisereinheit 38a weist zwei Windabweiserelemente 44a, 46a auf. Zwischen den Windabweiserelementen 44a, 46a ist ein Wischblattadapter 48a zur Kopplung mit einem nicht näher dargestellten Wischarmadapter der Wischarmvorrichtung angeordnet. Die Wischarmvorrichtung ist über den Wischarmadapter mit dem Wischblattadapter 48a des Wischblatts 32a lösbar gekoppelt.

Die innere Endkappe 40a ist an einem Ende des Wischblatts 32a angeordnet, das zumindest im Wesentlichen in Richtung einer Schwenkachse 50a ausgerichtet ist, um welche schwenkbar die Wischarmvorrichtung von einer Antriebswelle 52a antreibbar ist. In einem Wischbetrieb bewegt sich die innere Endkappe 40a entlang eines Wischblattinnenkreises. Um die innere Endkappe 40a erstreckt sich ein Wischblattinnenkreisbereich 24a. Genauer gesagt weist der Wischblattinnenkreisbereich 24a eine kugelförmige Erstreckung um die innere Endkappe 40a mit einem Kugeldurchmesser von 10 cm auf.

Die Wischarmvorrichtung weist ein Befestigungsteil 54a auf, das zu einer drehfesten Kopplung mit der Antriebswelle 52a vorgesehen ist. Die Wischarmvorrichtung umfasst ein Gelenkteil 56a. Das Gelenkteil 56a ist gelenkig mit dem Befestigungsteil 54a verbunden. Das Gelenkteil 56a ist mit der Wischstange 10a vercrimpt. Es ist in diesem Zusammenhang jedoch auch denkbar, dass die Wischstange 10a einstückig mit dem Gelenkteil 56a ausgebildet ist. Der nicht dargestellte Wischarmadapter ist üblicherweise mit der Wischstange 10a vercrimpt oder einstückig mit der Wischstange 10a ausgebildet. Die Wischstange 10a weist einen zumindest im Wesentlichen rechteckigen Querschnitt auf. Die Wischstange 10a ist von einer lackierten Metallstange gebildet.

Die Wischarmvorrichtung weist eine Waschwasserdüsenhalteeinheit 12a auf. Die Waschwasserdüsenhalteeinheit 12a ist zu einer Befestigung einer Waschwasserdüse 14a an der Wischstange 10a vorgesehen. Die Waschwasserdüsenhalteeinheit 12a ist im Wischblattinnenkreisbereich 24a der Wischstange 10a angeordnet. Ein Abstand der Waschwasserdüsenhalteeinheit 12a von der inneren Endkappe 40a beträgt in einem betriebsbereiten Zustand weniger als 10 cm.

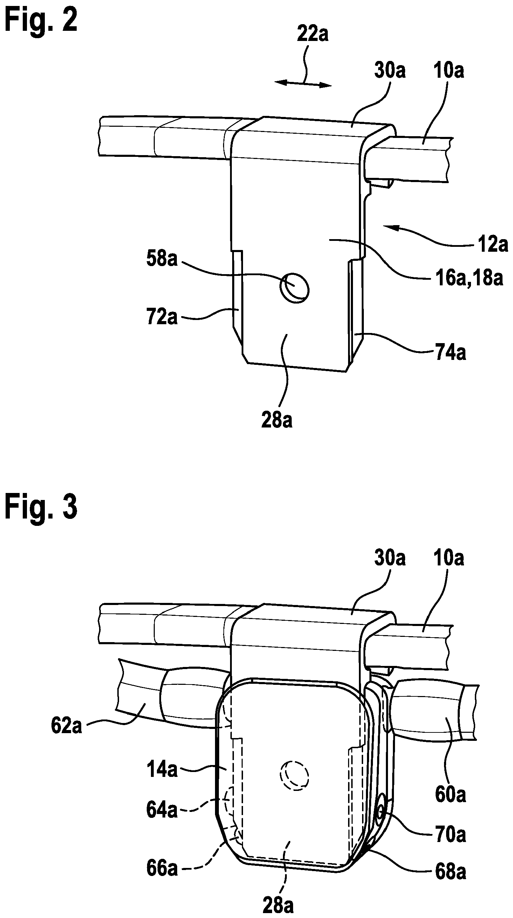

Wie in der Figur 2 gezeigt, umfasst die Waschwasserdüsenhalteeinheit 12a ein Halteblechelement 16a. Das Halteblechelement 16a ist von einem Stanzbiegeteil 18a gebildet. Das Stanzbiegeteil 18a ist in einem Stanz- und/oder Biegeverfahren hergestellt. Das Stanzbiegeteil 18a ist aus Metall ausgebildet. Das Halteblechelement 16a weist eine Befestigungslasche 28a auf. Die Befestigungslasche 28a ist eben ausgebildet. Die Befestigungslasche 28a erstreckt sich in einem montierten Zustand zumindest im Wesentlichen senkrecht zu einer Wischrichtung. Die Befestigungslasche 28a ist zur Befestigung der Waschwasserdüse 14a vorgesehen. Die Befestigungslasche 28a weist eine Rastausnehmung 58a auf. Die Rastausnehmung 58a weist einen kreisförmigen Querschnitt auf. Die Rastausnehmung 58a ist durch eine Bohrung ausgebildet. Die Rastausnehmung 58a ist zur Herstellung einer Rastverbindung mit einem nicht näher gezeigten Rastmittel der Waschwasserdüse 14a vorgesehen. Die Befestigungslasche 28a wird bei einer Montage in eine nicht näher bezeichnete Ausnehmung der Waschwasserdüse 14a eingeführt. Die Befestigungslasche 28a weist abgeschrägte Ecken auf. Somit umfasst die Befestigungslasche 28a eine Montagehilfe zur Montage der Waschwasserdüse 14a. Die Befestigungslasche 28a weist ferner zwei seitlich angeordnete längliche Vertiefungen 72a, 74a auf. Die Vertiefungen 72a, 74a sind zur erleichterten Einführung der Befestigungslasche 28a in die Waschwasserdüse 14a vorgesehen.

An einem wischstangenzugewandten Ende bildet das Halteblechelement 16a ein erstes Verstemmteil 30a aus. Bei einer Montage wird das Halteblechelement 16a der Waschwasserdüsenhalteeinheit 12a mit der Wischstange 10a verstemmt. Das erste Verstemmteil 30a weist vor einer Montage ein U-förmiges Profil auf. Seitenwandungen des U-förmigen Profils werden bei einer Montage um die Wischstange 10a gebogen und sichern das Halteblechelement 16a an der Wischstange 10a. In einer zusätzlichen Ausgestaltung ist das Halteblechelement 16a mit der Wischstange 10a verklebt und/oder verschweißt. Das erste Verstemmteil 30a ist, in eine Wischstangenlängsrichtung 22a betrachtet, auf einer gleichen Höhe mit der Befestigungslasche 28a angeordnet.

Die Figur 3 zeigt die Waschwasserdüsenhalteeinheit 12a mit der daran gekoppelten Waschwasserdüse 14a. Die Waschwasserdüse 14a ist in der Rastausnehmung 58a verrastet. Die Waschwasserdüse 14a ist mit zwei Waschwasserschläuchen 60a, 62a verbunden. Durch den einen Waschwasserschlauch 60a wird Waschwasser in die Waschwasserdüse 14a geleitet. Durch den anderen Waschwasserschlauch 62a wird das Waschwasser teilweise an eine weitere, nicht gezeigte Waschwasserdüse geleitet. Die Waschwasserdüse 14a weist vier Sprühöffnungen 64a, 66a, 68a, 70a auf. Die Sprühöffnungen 64a, 66a, 68a, 70a sprühen in einem Waschvorgang das Waschwasser in Richtung der Fahrzeugscheibe 34a.

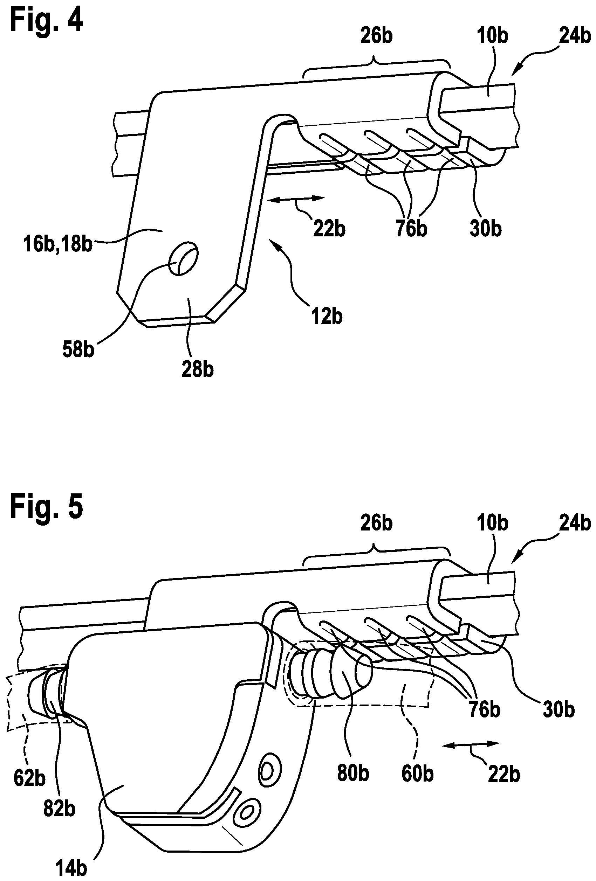

In den Figuren 4 bis 10 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 10 ist der Buchstabe a durch die Buchstaben b bis d ersetzt.

Die Figur 4 zeigt ein weiteres Ausführungsbeispiel einer Wischarmvorrichtung mit einer Wischstange 10b und mit einer Waschwasserdüsenhalteeinheit 12b. Die Waschwasserdüsenhalteeinheit 12b umfasst ein Halteblechelement 16b. Das Halteblechelement 16b ist von einem Stanzbiegeteil 18b gebildet. Die Waschwasserdüsenhalteeinheit 12b ist in einem Wischblattinnenkreisbereich 24b der Wischstange 10b angeordnet.

Die Wischstange 10b weist einen gerillten Befestigungsbereich 26b auf. Der Befestigungsbereich 26b ist zur Befestigung des Halteblechelements 16b vorgesehen. Der gerillte Befestigungsbereich 26b weist drei nicht näher dargestellte Rillen auf. Die Rillen verlaufen quer zu einer Wischstangenlängsrichtung 22b. Der Befestigungsbereich 26b erstreckt sich über zumindest 1 cm. Das Halteblechelement 16b umfasst ein erstes Verstemmteil 30b. Das erste Verstemmteil 30b ist einstückig mit dem Halteblechelement 16b ausgebildet. Das erste Verstemmteil 30b ist dazu vorgesehen, mit der Wischstange 10b verstemmt zu werden. Bei einem Verstemmen werden Teilbereiche des ersten Verstemmteils 30b in die Rillen der Wischstange 10b gepresst. Das erste Verstemmteil 30b weist nach einer Montage zumindest eine quer zur Wischstangenlängsrichtung 22b verlaufende Rille 76b auf. Im gezeigten Ausführungsbeispiel weist das erste Verstemmteil 30b nach einer Montage drei quer zur Wischstangenlängsrichtung 22b verlaufende Rillen 76b auf. Das erste Verstemmteil 30b weist vor einer Montage ein U-förmiges Profil auf. Seitenwandungen des U-förmigen Profils werden bei einer Montage um die Wischstange 10b gebogen und sichern das Halteblechelement 16b an der Wischstange 10b. In einer zusätzlichen Ausgestaltung ist das Halteblechelement 16b mit der Wischstange 10b verklebt und/oder verschweißt.

Das Halteblechelement 16b umfasst eine Befestigungslasche 28b zur Befestigung einer Waschwasserdüse 14b der Wischarmvorrichtung. Die Befestigungslasche 28b ist einstückig mit dem ersten Verstemmteil 30b ausgebildet. Die Befestigungslasche 28b schließt mit dem ersten Verstemmteil 30b einen Winkel von 90° ein. Das erste Verstemmteil 30b ist, in Wischstangenlängsrichtung 22b betrachtet, versetzt zur Befestigungslasche 28b angeordnet.

Wie in der Figur 5 gezeigt, ist die Waschwasserdüsenhalteeinheit 12b zu einer Befestigung der Waschwasserdüse 14b an der Wischstange 10b vorgesehen. Die Waschwasserdüse 14b weist zwei Schlauchanschlüsse 80b, 82b auf. Die Schlauchanschlüsse 80b, 82b sind jeweils zu einer Kopplung mit einem Waschwasserschlauch 60b, 62b vorgesehen. Die Befestigungslasche 28b weist eine Rastausnehmung 58b auf. Die Rastausnehmung 58b weist einen kreisförmigen Querschnitt auf. Die Rastausnehmung 58b ist durch eine Bohrung ausgebildet. Die Rastausnehmung 58b ist zur Herstellung einer Rastverbindung mit einem nicht näher gezeigten Rastmittel der Waschwasserdüse 14b vorgesehen. Die Befestigungslasche 28b wird bei einer Montage in eine nicht näher bezeichnete Ausnehmung der Waschwasserdüse 14b eingeführt. Die Befestigungslasche 28b weist abgeschrägte Ecken auf. Somit umfasst die Befestigungslasche 28b eine Montagehilfe zur Montage der Waschwasserdüse 14b.

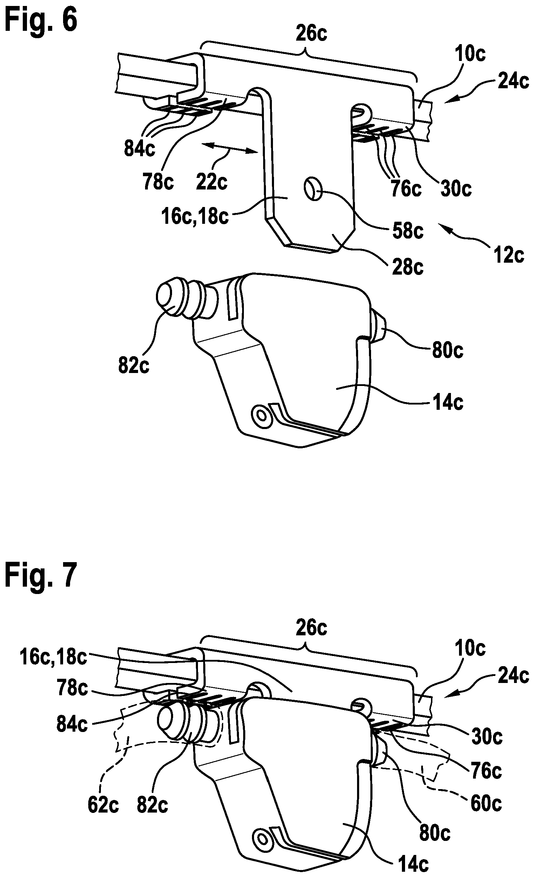

Ein weiteres Ausführungsbeispiel ist in den Figuren 6 und 7 gezeigt. Die Figur 6 zeigt eine Wischarmvorrichtung mit einer Wischstange 10c und mit einer Waschwasserdüsenhalteeinheit 12c vor einer Montage. Die Waschwasserdüsenhalteeinheit 12c umfasst ein Halteblechelement 16c. Das Halteblechelement 16c ist von einem Stanzbiegeteil 18c gebildet. Die Waschwasserdüsenhalteeinheit 12c ist in einem Wischblattinnenkreisbereich 24c der Wischstange 10c angeordnet. Das Halteblechelement 16c umfasst eine Befestigungslasche 28c zur Befestigung einer Waschwasserdüse 14c der Wischarmvorrichtung.

Die Wischstange 10c weist einen gerillten Befestigungsbereich 26c auf. Der Befestigungsbereich 26c ist zur Befestigung des Halteblechelements 16c vorgesehen. Der gerillte Befestigungsbereich 26c weist sechs nicht näher dargestellte Rillen auf. Die Rillen verlaufen quer zu einer Wischstangenlängsrichtung 22c. Der Befestigungsbereich 26c erstreckt sich über zumindest 3 cm. Das Halteblechelement 16c umfasst ein erstes Verstemmteil 30c. Das erste Verstemmteil 30c ist einstückig mit dem Halteblechelement 16c ausgebildet. Die Befestigungslasche 28c ist einstückig mit dem ersten Verstemmteil 30c ausgebildet. Die Befestigungslasche 28c schließt mit dem ersten Verstemmteil 30c einen Winkel von 90° ein.

Das erste Verstemmteil 30c ist dazu vorgesehen, mit der Wischstange 10c verstemmt zu werden. Bei einem Verstemmen werden Teilbereiche des ersten Verstemmteils 30c in die Rillen der Wischstange 10c gepresst. Das erste Verstemmteil 30c weist nach einer Montage zumindest eine quer zur Wischstangenlängsrichtung 22c verlaufende Rille 76c auf. Im gezeigten Ausführungsbeispiel weist das erste Verstemmteil 30c nach einer Montage drei quer zur Wischstangenlängsrichtung 22c verlaufende Rillen 76c auf. Das erste Verstemmteil 30c weist vor einer Montage ein U-förmiges Profil auf. Seitenwandungen des U-förmigen Profils werden bei einer Montage um die Wischstange 10c gebogen und sichern das Halteblechelement 16c an der Wischstange 10c. Das erste Verstemmteil 30c ist, in Wischstangenlängsrichtung 22c betrachtet, versetzt zur Befestigungslasche 28c angeordnet.

Im Unterschied zum zweiten Ausführungsbeispiel umfasst das Halteblechelement 16c ein zweites Verstemmteil 78c. Das zweite Verstemmteil 78c ist, in Wischstangenlängsrichtung 22c betrachtet, versetzt zum ersten Verstemmteil 30c angeordnet. Das zweite Verstemmteil 78c ist einstückig mit dem Halteblechelement 16c ausgebildet. Das zweite Verstemmteil 78c ist dazu vorgesehen, mit der Wischstange 10c verstemmt zu werden. Bei einem Verstemmen werden Teilbereiche des zweiten Verstemmteils 78c in die Rillen der Wischstange 10c gepresst. Das zweite Verstemmteil 78c weist nach einer Montage zumindest eine quer zur Wischstangenlängsrichtung 22c verlaufende Rille 84c auf. Im gezeigten Ausführungsbeispiel weist das zweite Verstemmteil 78c nach einer Montage drei quer zur Wischstangenlängsrichtung 22c verlaufende Rillen 84c auf. Das zweite Verstemmteil 78c weist vor einer Montage ein U-förmiges Profil auf. Seitenwandungen des U-förmigen Profils werden bei einer Montage um die Wischstange 10c gebogen und sichern das Halteblechelement 16c an der Wischstange 10c. Das zweite Verstemmteil 78c ist, in Wischstangenlängsrichtung 22c betrachtet, versetzt zur Befestigungslasche 28c angeordnet. Die Befestigungslasche 28c ist zwischen dem ersten Verstemmteil 30c und dem zweiten Verstemmteil 78c angeordnet. In einer zusätzlichen Ausgestaltung ist das Halteblechelement 16c mit der Wischstange 10c verklebt und/oder verschweißt. Die Befestigungslasche 28c ist einstückig mit dem zweiten Verstemmteil 78c ausgebildet. Die Befestigungslasche 28c schließt mit dem zweiten Verstemmteil 78c einen Winkel von 90° ein.

Wie in der Figur 7 gezeigt, ist die Waschwasserdüsenhalteeinheit 12c zu einer Befestigung der Waschwasserdüse 14c an der Wischstange 10c vorgesehen. Die Waschwasserdüse 14c weist zwei Schlauchanschlüsse 80c, 82c auf. Die Schlauchanschlüsse 80c, 82c sind jeweils zu einer Kopplung mit einem Waschwasserschlauch 60c, 62c vorgesehen. Die Befestigungslasche 28c weist eine Rastausnehmung 58c auf. Die Rastausnehmung 58c weist einen kreisförmigen Querschnitt auf. Die Rastausnehmung 58c ist durch eine Bohrung ausgebildet. Die Rastausnehmung 58c ist zur Herstellung einer Rastverbindung mit einem nicht näher gezeigten Rastmittel der Waschwasserdüse 14c vorgesehen. Die Befestigungslasche 28c wird bei einer Montage in eine nicht näher bezeichnete Ausnehmung der Waschwasserdüse 14c eingeführt. Die Befestigungslasche 28c weist abgeschrägte Ecken auf. Somit umfasst die Befestigungslasche 28c eine Montagehilfe zur Montage der Waschwasserdüse 14c.

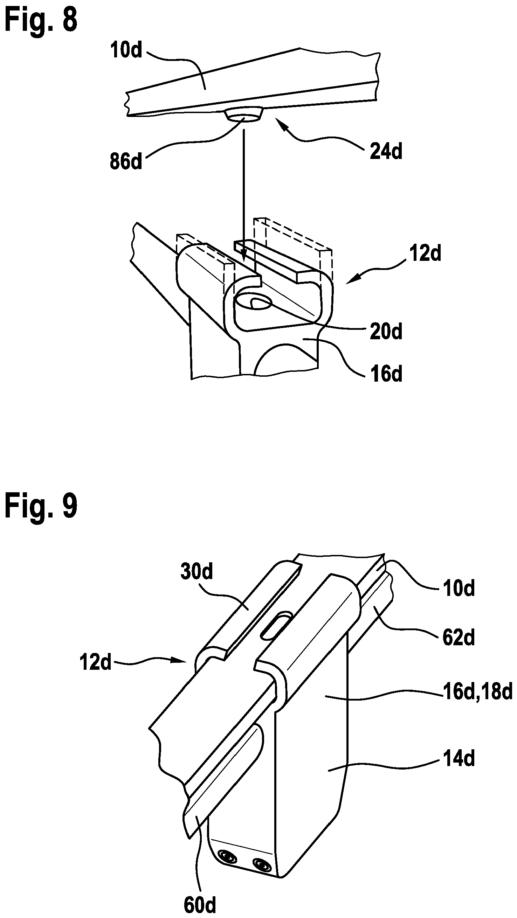

Die Figur 8 zeigt ein weiteres Ausführungsbeispiel einer Wischarmvorrichtung mit einer Wischstange 10d und mit einer Waschwasserdüsenhalteeinheit 12d. Die Waschwasserdüsenhalteeinheit 12d umfasst ein Halteblechelement 16d. Das Halteblechelement 16d ist von einem Stanzbiegeteil 18d gebildet. Die Waschwasserdüsenhalteeinheit 12d ist in einem Wischblattinnenkreisbereich 24d der Wischstange 10d angeordnet.

Das Halteblechelement 16d umfasst ein Formschlusselement 20d. Das Formschlusselement 20d ist zu einer formschlüssigen Fixierung in eine Wischstangenlängsrichtung 22d vorgesehen. Das Formschlusselement 20d bildet eine Befestigungsausnehmung zur Aufnahme eines Nockens 86d der Wischstange 10d aus. Das Halteblechelement 16d ist einstückig mit einer Waschwasserdüse 14d ausgebildet. Das Halteblechelement 16d umfasst ein erstes Verstemmteil 30d. Das erste Verstemmteil 30d ist einstückig mit dem Halteblechelement 16d ausgebildet. Das erste Verstemmteil 30d ist, in einer Wischstangenlängsrichtung 22d betrachtet, auf einer gleichen Höhe mit der Waschwasserdüse 14d angeordnet. Das erste Verstemmteil 30d ist dazu vorgesehen, mit der Wischstange 10d verstemmt zu werden. Das erste Verstemmteil 30d weist vor einer Montage ein U-förmiges Profil auf. Seitenwandungen des U-förmigen Profils werden bei einer Montage um die Wischstange 10d gebogen und sichern das Halteblechelement 16d an der Wischstange 10d. Die Waschwasserdüse 14d und das Halteblechelement 16d sind spiegelsymmetrisch relativ zu einer senkrecht zu einer Wischrichtung verlaufenden Symmetrieebene ausgebildet. In einer zusätzlichen Ausgestaltung ist das Halteblechelement 16d mit der Wischstange 10d verklebt und/oder verschweißt. Wie in der Figur 9 gezeigt, ist die Waschwasserdüsenhalteeinheit 12d zu einer Befestigung der Waschwasserdüse 14d an der Wischstange 10d vorgesehen. Die Waschwasserdüse 14d ist mit zwei Waschwasserschläuchen 60d, 62d gekoppelt.

## Patentansprüche

1. Wischarmvorrichtung mit einer Wischstange (10d) und mit einer Waschwasserdüsenhalteeinheit (12d), die zu einer Befestigung zumindest einer Waschwasserdüse (14d) an der Wischstange (10d) vorgesehen ist, wobei die Waschwasserdüsenhalteeinheit (12d) zumindest ein Halteblechelement (16d) umfasst, **dadurch gekennzeichnet, dass** das zumindest eine Halteblechelement (16d) ein Formschlusselement (20d) umfasst, das zu einer formschlüssigen Fixierung in eine Wischstangenlängsrichtung (22d) vorgesehen ist.

2. Wischarmvorrichtung nach Anspruch 1, **dadurch gekennzeichnet, dass** das zumindest eine Halteblechelement (16d) von einem Stanzbiegeteil (18d) gebildet ist.

3. Wischarmvorrichtung nach einem der der vorhergehenden Ansprüche, **dadurch gekennzeichnet, dass** die Waschwasserdüsenhalteeinheit (12d) in einem Wischblattinnenkreisbereich (24d) der Wischstange (10d) angeordnet ist.

4. Wischarmvorrichtung nach einem der der vorhergehenden Ansprüche, **dadurch gekennzeichnet, dass** die Wischstange zumindest einen gerillten Befestigungsbereich zur Befestigung des zumindest einen Halteblechelements umfasst.

5. Wischarmvorrichtung nach einem der vorhergehenden Ansprüche, **dadurch gekennzeichnet, dass** das zumindest eine Halteblechelement zumindest eine Befestigungslasche zur Befestigung der zumindest einen Waschwasserdüse umfasst.

6. Wischarmvorrichtung nach einem der vorhergehenden Ansprüche, **dadurch gekennzeichnet, dass** das zumindest eine Halteblechelement (16d) zumindest ein erstes Verstemmteil (30d) umfasst, das dazu vorgesehen ist, mit der Wischstange (10d) verstemmt zu werden.

7. Wischarmvorrichtung nach den Ansprüchen 5 und 6, **dadurch gekennzeichnet, dass** das zumindest eine erste Verstemmteil in eine Wischstangenlängsrichtung betrachtet auf einer gleichen Höhe mit der Befestigungslasche angeordnet ist.

8. Wischarmvorrichtung nach den Ansprüchen 5 und 6, **dadurch gekennzeichnet, dass** das zumindest eine erste Verstemmteil in eine Wischstangenlängsrichtung betrachtet versetzt zur Befestigungslasche angeordnet ist.

9. Wischarmvorrichtung nach einem der vorhergehenden Ansprüche, **gekennzeichnet durch** eine zumindest eine Waschwasserdüse (14d), die am zumindest einen Halteblechelement (16d) angeordnet ist.

10. Verfahren zur Herstellung einer Wischarmvorrichtung nach einem der vorhergehenden Ansprüche, wobei das Halteblechelement (16d) der Waschwasserdüsenhalteeinheit (12d) mit der Wischstange (10d) verstemmt wird.

## Claims

1. Wiper arm device with a wiper rod (10d) and with a washing water nozzle holding unit (12d) which is provided for fastening at least one washing water nozzle (14d) to the wiper rod (10d), wherein the washing water nozzle holding unit (12d) comprises at least one holding plate element (16d), **characterized in that** the at least one holding plate element (16d) comprises a form-fitting element (20d) which is provided for form-fitting fixing in a longitudinal direction (22d) of the wiper rod.

2. Wiper arm device according to Claim 1, **characterized in that** the at least one holding plate element (16d) is formed by a punched and bent part (18d).

3. Wiper arm device according to either of the preceding claims, **characterized in that** the washing water nozzle holding unit (12d) is arranged in a wiper blade inner circle region (24d) of the wiper rod (10d).

4. Wiper arm device according to one of the preceding claims, **characterized in that** the wiper rod comprises at least one grooved fastening region for fastening the at least one holding plate element.

5. Wiper arm device according to one of the preceding claims, **characterized in that** the at least one holding plate element comprises at least one fastening tab for fastening the at least one washing water nozzle.

6. Wiper arm device according to one of the preceding claims, **characterized in that** the at least one holding plate element (16d) comprises at least one first caulking part (30d) which is provided in order to be caulked to the wiper rod (10d).

7. Wiper arm device according to Claims 5 and 6, **characterized in that** the at least one first caulking part is arranged at a same height as the fastening tab, as viewed in the longitudinal direction of the wiper rod.

8. Wiper arm device according to Claims 5 and 6, **characterized in that** the at least one first caulking part is arranged offset with respect to the fastening tab, as viewed in the longitudinal direction of the wiper rod.

9. Wiper arm device according to one of the preceding claims, **characterized by** an at least one washing water nozzle (14d) which is arranged on the at least one holding plate element (16d).

10. Method for producing a wiper arm device according to one of the preceding claims, wherein the holding plate element (16d) of the washing water nozzle holding unit (12d) is caulked to the wiper rod (10d) .

## Revendications

1. Ensemble de bras d'essuie-glace présentant une tringle (10d) d'essuie-glace et une unité (12d) de support de tuyère d'eau de lavage prévue pour fixer au moins une tuyère (14d) d'eau de lavage sur la tringle d'essuie-glace (10d), l'unité (12d) de support de tuyère d'eau de lavage comportant au moins un élément de tôle de maintien (16d),
**caractérisé en ce que**
au moins un élément de tôle de maintien (16d) comporte un élément (20d) en correspondance géométrique prévu pour une fixation en correspondance géométrique dans le sens de la longueur (22d) de la tringle d'essuie-glace.

2. Ensemble de bras d'essuie-glace selon la revendication 1, **caractérisé en ce que** le ou les éléments (16d) de tôle de maintien (16d) sont formés d'une pièce flexible estampée (18d).

3. Ensemble de bras d'essuie-glace selon l'une des revendications précédentes, **caractérisé en ce que** l'unité (12d) de support de tuyère d'eau de lavage est disposée sur une partie circulaire intérieure (24d) de balai d'essuie-glace de la tringle d'essuie-glace (10d) .

4. Ensemble de bras d'essuie-glace selon l'une des revendications précédentes, **caractérisé en ce que** la tringle d'essuie-glace comporte au moins une partie nervurée de fixation pour la fixation du ou des éléments de tôle de maintien.

5. Ensemble de bras d'essuie-glace selon l'une des revendications précédentes, **caractérisé en ce que** le ou les éléments de tôle de maintien comportent au moins une patte de fixation pour la fixation de la ou des tuyères d'eau de lavage.

6. Ensemble de bras d'essuie-glace selon l'une des revendications précédentes, **caractérisé en ce que** le ou les éléments (16d) de tôle de maintien comportent au moins une première partie matée (30d) prévue pour être matée sur la tringle d'essuie-glace (10d).

7. Ensemble de bras d'essuie-glace selon les revendications 5 et 6, **caractérisé en ce qu'**au moins une première partie matées est disposée dans une direction longitudinale de la tringle de maintien à même hauteur que la patte de fixation.

8. Ensemble de bras d'essuie-glace selon les revendications 5 et 6, **caractérisé en ce qu'**au moins une première partie matées est disposée dans une direction longitudinale de la tringle de maintien en décalage par rapport à la patte de fixation.

9. Ensemble de bras d'essuie-glace selon l'une des revendications précédentes, **caractérisé par** au moins une tuyère (14d) d'eau de lavage disposée sur le ou les éléments (16d) de tôle de maintien.

10. Procédé de fabrication d'un ensemble de bras d'essuie-glace selon l'une des revendications précédentes, dans lequel l'élément (16d) de tôle de maintien de l'unité (12d) de support de tuyère d'eau de lavage est maté sur la tringle d'essuie-glace (10d).
